# EUROPEAN PATENT SPECIFICATION

(11) **EP 3 357 619 B1**
(45) Date of publication and mention of the grant of the patent: **23.10.2019**
(21) Application number: 18152366.3
(22) Date of filing: 18.01.2018
(51) Int. Cl.: B23D 47/04, B23D 47/08, B27B 5/18

(54) **FIREWOOD CUTTING MACHINE**
FEUERHOLZSCHNEIDEMASCHINE
MACHINE DE DÉCOUPE DE BOIS DE CHAUFFAGE

(30) Priority: 06.02.2017 IT 201700012722
(43) Date of publication of application: 08.08.2018
(73) Proprietor: Ricca Andrea & C. S.n.c., 12022 Busca (Cuneo) (IT)
(72) Inventor: RICCA, Andrea, Deceased (IT)
(74) Representative: Buzzi, Franco

(56) References cited:
- EP-A1- 2 705 937
- EP-A2- 3 045 248
- WO-A2-02/051601
- DE-U1-202012 007 421
- US-A- 4 259 886

## Description

### Field of the invention

The present invention refers to machines for cutting firewood according to the preamble of claim 1 and comprising a drum rotatable around a downwardly inclined axis and provided with tubular axial guides for the insertion of trunk portions and the like to be cut. The trunk portions slide by gravity towards a cutting station including a rotary saw disk suitable to transversely intercept and cut the trunk portions into logs of predetermined length.

The present invention also relates to a method for cutting firewood according to the preamble of claim 8.

### State of the prior art

Such a machine and such a method are known form EP2705937A1.

Cutting machines of the type defined above are described and illustrated, for example, in documents DE-29607119U1, EP-2705937B1 and EP-3045248A2. All these machines have the common characteristic according to which the drum continuously rotates around the axis thereof so as to progressively carry the trunk portions inserted into the tubular guides thereof against the rotary saw disk, held in stationary position transversely to the axis of the drum.

This arrangement reveals various drawbacks. Firstly, the loading of the rotatable drum, i.e. the insertion of the trunk portions into the tubular guides thereof, is complex and tiresome due to the continuous rotary movement of the rotatable drum. These difficulties are further heightened by the general unevenness of the firewood that can be used with this type of machines.

A further drawback lies in the difficulty for the operator to easily identify the tubular guide of the drum that is progressively exhausted, so as to be able to introduce a new piece of wood thereinto.

### Summary of the invention

The object of the invention is to overcome the aforementioned drawbacks, and this object is attained by a cutting machine as defined in claim 1 and by a method for cutting firewood as defined in claim 8.

The position of the axial stop member is preferably adjustable so as to selectively vary the cutting length of the logs, and the saw disc is conveniently carried by a swinging arm to which a rod which drives a shaft for actuating the axial stop member in rotation, is pivoted.

The radial clamping member conveniently consists of a rotatable lever connected to the swinging arm by means of a traction spring.

The machine according to the invention reveals various advantages: holding the drum in stationary position up to the end of the complete cutting of the trunk portion contained in each tubular guide guarantees greater simplicity when it comes to loading the wood into the tubular guides. Furthermore, besides avoiding the risk of jamming during loading, it also enables saving energy and reducing wear due to the elimination of empty rotation of the drum. The blocking of the trunks during cutting enables enhancing the efficiency of the action of the saw disc.

### Brief description of the drawings

The invention will now be described in detail with reference to the attached drawings, provided purely by way of non-limiting example, wherein:
- figure 1 is a first schematic perspective view of a machine for cutting firewood according to the invention,
- figure 2 is a second perspective view of the machine,
- figure 3 is a front elevational view - and in larger scale - of the cutting station of the machine,
- figure 4 is a side elevational view according to arrow IV of figure 3,
- figure 5 is a dorsal elevational view according to arrow V of figure 4,
- figures 6 and 7 are two perspective views analogous to figure 1 with part of the machine removed to show the cutting station during operation, respectively in a raised inoperative position and in a lowered operative position of the saw disc, and
- figure 8 shows the hydraulic diagram of the machine.

### Detailed description of the invention

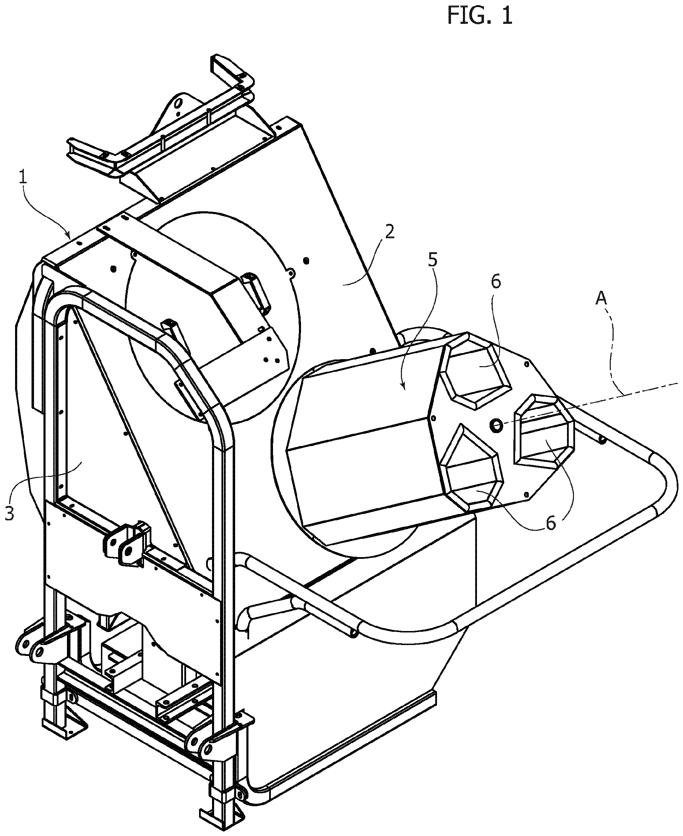

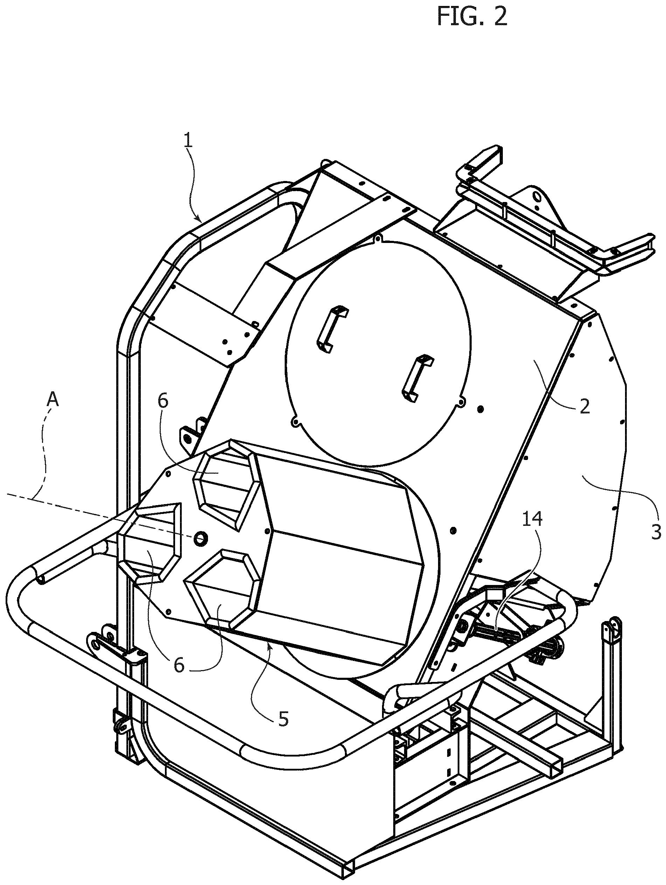

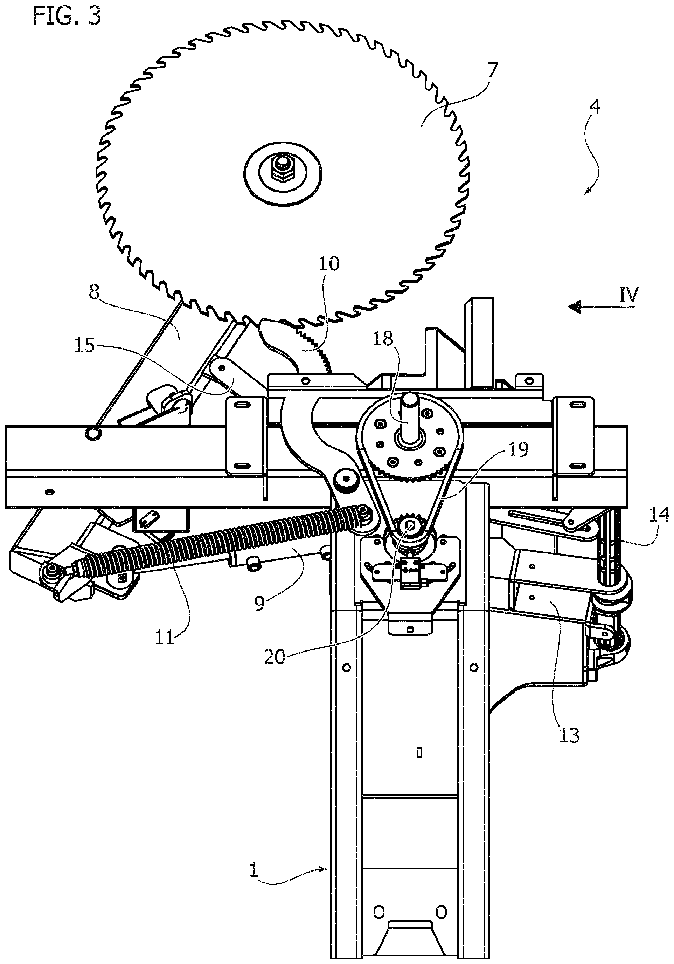

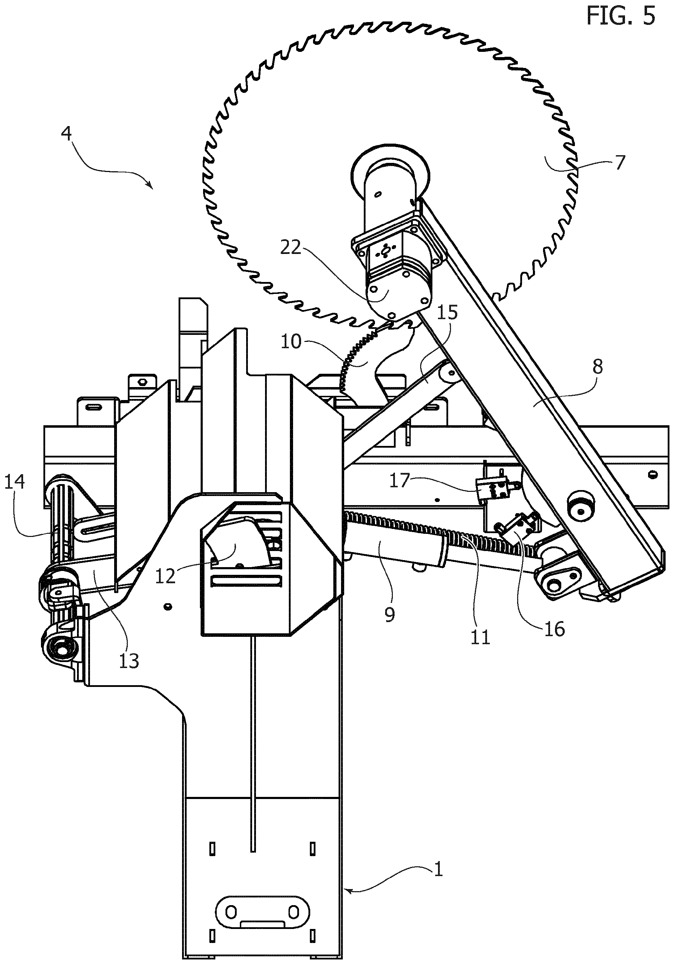

Initially referring to figures 1 and 2, the machine for cutting firewood according to the invention comprises a support framework generally indicated with 1, bearing a front partitioning 2 and lateral partitionings 3 within which there is arranged a cutting station 4, to be addressed further in detail hereinafter with particular reference to figures 3-5.

A drum, projecting in front of the front partitioning 2, rotatable around an axis A inclined downwardly towards the cutting station 4, is indicated with 5. The drum 5, whose drive shaft is indicated with 18 in figures 3, 4 and 6,7 is motor-driven and the rotation thereof around the axis A may be automated or it can be controlled by the operator whenever required.

The rotatable drum 5 is provided with tubular axial guides 6 (three in the illustrated example) each of which is suitable to enable the insertion of a firewood trunk portion or the like, normally previously cut to size for example with a length of about 2 m. and a transversal dimension typically not exceeding 18-20 cm.

Furthermore, the machine is provided with a system for discharging the sawdust produced during the operation and a rear conveyor for evacuating the cut logs, not illustrated in detail.

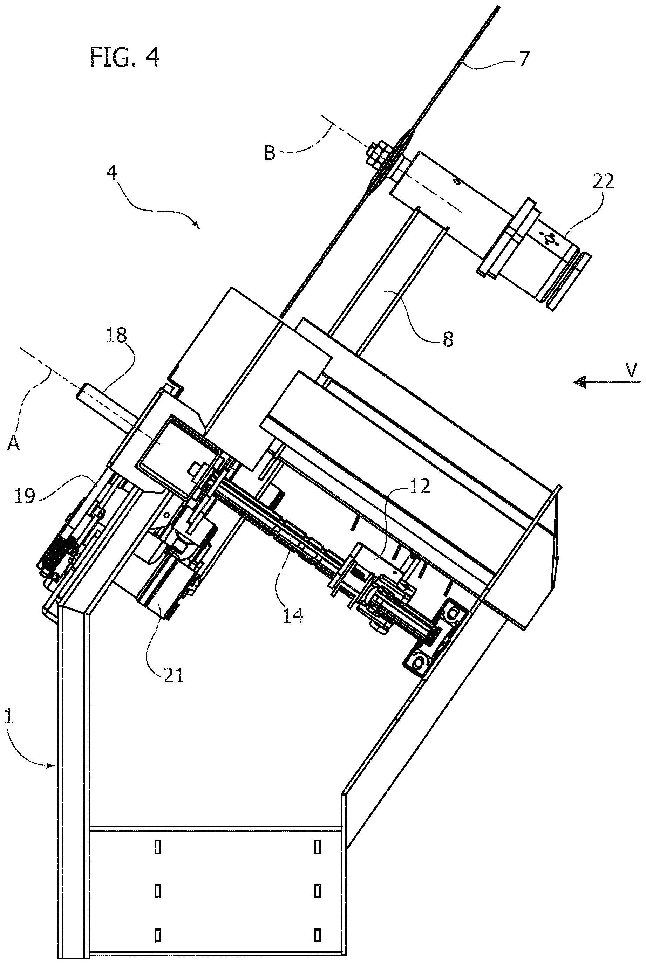

Now, with reference to figures 3-5, the cutting station 4 comprises a motor-driven rotary saw disk 7 whose axis, indicated with B in figure 4, is parallel to the axis A. Thus, the plane of the saw disc 7 is orthogonal to the trunk portions inserted - in use - into the tubular guides 6 of the rotatable drum 5.

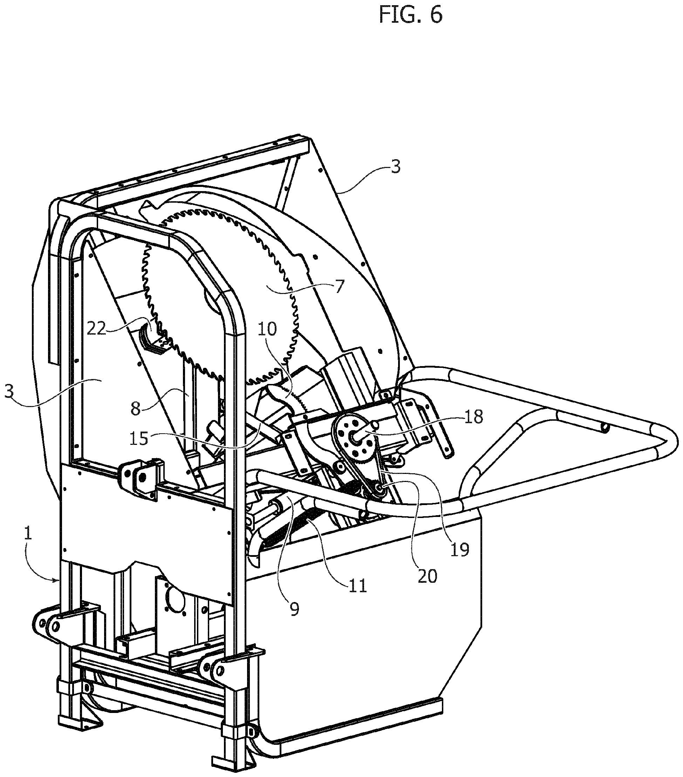

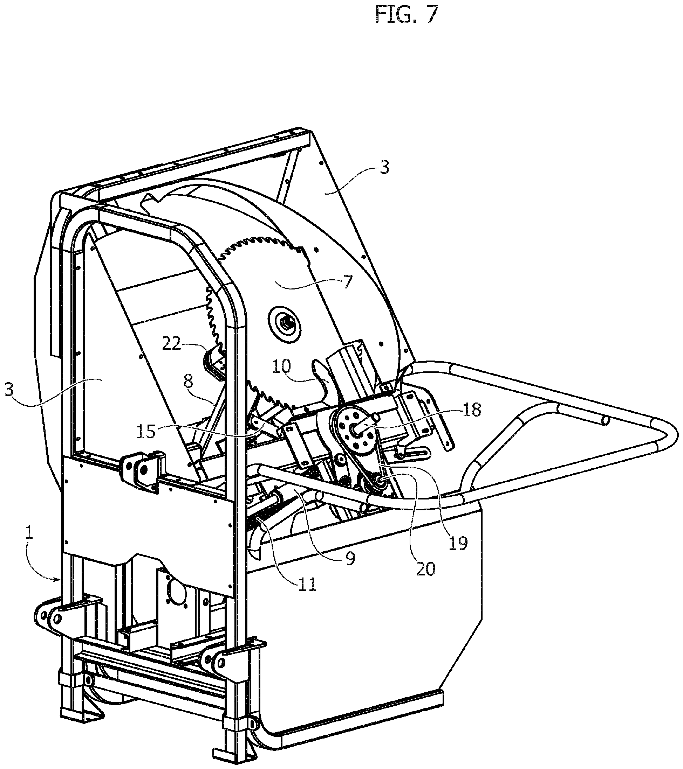

According to one of the distinctive characteristics of the invention, the saw disc 7 is carried by a swinging arm 8 which is actuated through a hydraulic jack 9 to displace the saw disc 7 between a raised inoperative position, represented in figures 3-5 as well as in figure 6, and a lowered operative position illustrated in figure 7. Thus, as observable hereinafter, when operating, the machine carries out the cutting of the entire trunk portion progressively inserted into a tubular guide 6 of the drum 5, prior to the latter rotating to carry out the cutting of the entire trunk portion inserted into another tubular guide 6. Furthermore, the displacement of the saw disc 7 is coordinated with the movement of a radial member for clamping the trunk portion during the cutting as well as with the displacement of an axial member for stopping the trunk portion, to be addressed below.

The radial clamping member 10 consists of a rotatable lever connected - at the bottom part - to the lower end of the swinging arm 8 by means of a helical traction spring 11. When the saw disc 7 is in the raised inoperative position, the radial clamping member 10 is in a raised inoperative angular position, under the pulling action exerted by the spring 11. When the saw disc 7 starts the descent thereof in the lowered operative position to carry out the cutting, the radial clamping member 10 rotates in the operative position too, to intercept and block the trunk portion progressively subjected to cutting by the saw disc 7, immediately prior to starting the cutting.

The axial member for stopping the trunk portion progressively subjected to cutting is indicated with 12 and it consists of a plate displaceable between a raised position and a lowered position by means of a swinging lever 13 driven by a rotatable shaft 14 in turn actuated by a rod 15 pivoted to the swinging arm 8. The swinging lever 13 may be fixed to the rotatable shaft 14 in different positions, so as to selectively vary the distance of the axial stop member 12 with respect to the drum 5 and thus the length of the logs progressively sawed from the trunk portion subjected to cutting. During the cutting carried out by the saw disc 7, when the latter moves in the lowered operative position, the plate 12 lowers while the trunk portion subjected to cutting is held by the radial clamping member 10. At the end of the cutting, when the saw disc 7 is brought back to the raised inoperative position and the cut log leaves the drum 5 by gravity, the plate 12 is raised so as to serve as an abutment for the trunk portion awaiting the cutting of the subsequent log.

Two adjustable limit switches, operatively associated to the hydraulic jack 9, respectively actuated at the end of the downwardly rotation and the upwardly rotation of the swinging arm 8, are indicated with 16, 17.

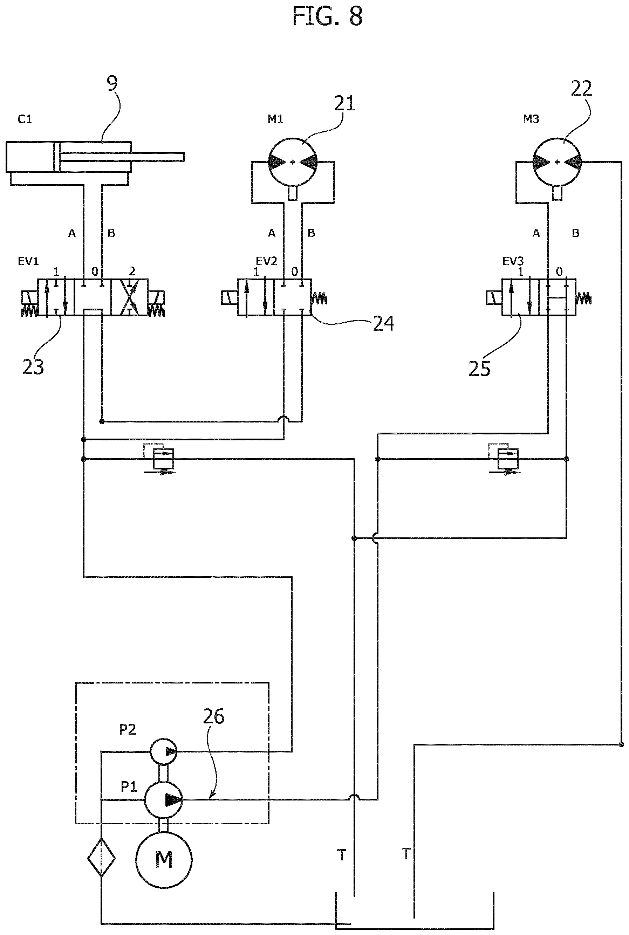

The rotatable drum 5 is driven in rotation by a shaft 18 actuated by a chain or cogged belt transmission 19, whose pinion 20 is actuated by a hydraulic motor indicated with 21 on the hydraulic diagram of figure 8. In such diagram, which also shows the hydraulic jack 9 which actuates the swinging arm 8, reference 22 is used to indicate a further hydraulic motor which actuates the saw disc 7. The hydraulic jack 9 and the hydraulic motors 21 and 22 are actuated, by means of respective solenoid valves 23, 24, 25, by a motor pump unit 26.

The cutting machine according to the invention operates as follows.

The tubular axial guides 6 of the drum 5 are progressively loaded with trunk portions or the like to be cut. Contrary to conventional cutting machines of the same type, and as previously explained, the trunk portion inserted into each tubular guide 6 is entirely cut into logs holding the drum 5 stationary, prior to the latter being rotated to subject the trunk portion inserted into the adjacent tubular guide 6 to cutting. Thus, the rotation of the drum 5 is not continuous but intermittent. This enables the operator to load the drum 5 in an extremely easy and efficient fashion.

The trunk portion, progressively subjected to cutting, slides by gravity into the related tubular guide 6 until it stops against the axial stop 12. The hydraulic jack 9 rotates the swinging arm 8 from the raised inoperative position represented in figures 3-5 and 6 to the lowered operative position illustrated in figure 7. During this displacement, the saw disc 7, driven in rotation by the hydraulic motor 22, cuts the log of the selected length from the trunk. In this step, the radial clamping member 10, displaced by means of the spring 11 in the lowered position prior to the saw disc 7 starting the cutting, holds the trunk portion during the cutting, while the axial stop member 12 is lowered. The cut log falls from the drum 5 by gravity and it is evacuated from the machine, and the subsequent return of the swinging arm 8 to the raised position returns the axial stop 12 to the raised position by means of the rod 15, the shaft 14 and the swinging lever 13 to stop the subsequent downwardly sliding of the trunk. This cycle is repeated identically, as mentioned, up to the complete cutting of each trunk portion inserted into the related tubular guide 6, and the drum 5 is rotated to proceed with the cutting of the trunk portion inserted into the adjacent tubular guide 6 only upon completion of the operation. As previously clarified, the rotation of the drum 5 can be controlled by the operator or be automated. Sensors - not illustrated - for detecting the presence/absence of the trunks in the tubular guides 6, are provided for in both cases.

Obviously, the construction details and the embodiments may widely vary with respect to what has been described and illustrated, without departing from the scope of protection of the present invention as defined in the claims that follow.

## Claims

1. Machine for cutting firewood, comprising a cutting station including a rotary saw disk (7), a drum (5) rotatable around a downwardly inclined axis (A) and provided with tubular axial guides (6) for the insertion of trunk portions and the like and their sliding thereof by gravity towards said cutting station, wherein the rotary saw disk (7) is suitable to transversely intercept and cut said trunk portions into logs of predetermined length, **characterised in that** it further includes first means for displacing the saw disc (7) between a raised inoperative position and a lowered operative position, second means for controlling the rotation of the drum (5), and control means for coordinating the displacement of the saw disk (7) with the movement of a radial member (10) for clamping the trunk portion during the cutting, as well as coordinating the displacement of the saw disc (7) with the displacement of an axial stop member (12) for stopping the trunk portion and with the rotation of the drum (5), wherein the saw disc (7) is displaceable between a raised inoperative position and a lowered operative position through said first means carrying out the cutting of the entire trunk portion inserted into a tubular guide (6) while the drum (5) remains stationary prior to being rotated by said second means for carrying out the cutting of an entire trunk portion inserted into another tubular guide (6).

2. Machine according to claim 1, **characterised in that** the position of said axial stop member (12) is adjustable so as to selectively vary the cutting length of the logs.

3. Machine according to claim 1 or claim 2, **characterised in that** the saw disk (7) is carried by a swinging arm (8) provided with a rod (15) that drives a shaft (14) for actuating said axial stop member (12) in rotation.

4. Machine according to claim 3, **characterised in that** adjustable limit stops (16, 17) of the angular stroke of said swinging arm (8) are provided.

5. Machine according to claim 3, **characterised in that** said radial clamping member consists of a rotatable lever (10) connected to said swinging arm (8) through a traction spring (11).

6. Machine according to claim 1, **characterised in that** said rotatable drum (5) is motor-driven.

7. Machine according to one or more of claims 3 to 6, **characterised in that** the rotatable drum (5), the saw disk (7) and the related swinging arm (8) are hydraulically driven.

8. Method for cutting firewood by means of a cutting machine comprising a drum (5) rotatable around a downwardly inclined axis (A) and provided with tubular axial guides (6) for the insertion of trunk portions and the like and their sliding thereof by gravity towards a cutting station including a rotary saw disk (7) suitable to transversely intercept and cut said trunk portions into logs of predetermined length, **characterised in that** it comprises displacing the saw disc (7) between a raised inoperative position and a lowered operative position to carry out the cutting of an entire trunk portion progressively inserted into a tubular guide (6) while the drum (5) remains stationary prior to being subsequently rotated to perform the cutting of an entire trunk portion inserted into another tubular guide (6), wherein the displacement of the saw disc (7) is coordinated with the rotation of the drum (5), with the movement of a radial member (10) for clamping the trunk portion during cutting as well as with the displacement of an axial stop member (12) for stopping the trunk portion.

9. Method according to claim 8, **characterised in that** the position of said axial stop member (12) is adjusted to selectively vary the cutting length of the logs.

## Patentansprüche

1. Feuerholzschneidemaschine, umfassend eine Schneidestation, die eine rotierende Sägescheibe (7), eine Trommel (5), die um eine nach unten geneigte Achse (A) drehbar und mit rohrförmigen axialen Führungen (6) zum Einführen von Stammabschnitten und dergleichen und deren Gleiten durch Schwerkraft in Richtung einer Schneidestation versehen ist, einschließt, wobei
die rotierende Sägescheibe (7) dazu geeignet ist, die Stammabschnitte in Querrichtung abzufangen und in Klötze vorbestimmter Länge zu schneiden, **dadurch gekennzeichnet, dass** sie ferner erste Mittel zum Verschieben der Sägescheibe (7) zwischen einer angehobenen Ruheposition und einer abgesenkten Arbeitsposition, zweite Mittel zum Regeln der Drehung der Trommel (5) und Regelmittel zum Koordinieren der Verschiebung der Sägescheibe (7) mit der Bewegung eines radialen Elements (10) zum Festklemmen des Stammabschnitts während des Schneidens sowie zum Koordinieren der Verschiebung der Sägescheibe (7) mit der Verschiebung eines axialen Anschlagelements (12) zum Anhalten des Stammabschnitts und mit der Drehung der Trommel (5) einschließt, wobei
die Sägescheibe (7) zwischen einem angehobenen Ruheabschnitt und einem abgesenkten Arbeitsabschnitt durch die ersten Mittel, die das Schneiden des gesamten in eine rohrförmige Führung (6) eingeführten Stammabschnitts ausführen, verschiebbar ist, während die Trommel (5) stationär bleibt, bevor sie durch die zweiten Mittel zum Ausführen des Schneidens eines gesamten in eine andere rohrförmige Führung (6) eingeführten Stammabschnitts gedreht wird.

2. Maschine nach Anspruch 1, **dadurch gekennzeichnet, dass** die Position des axialen Anschlagelements (12) einstellbar ist, um die Schnittlänge der Klötze wahlweise zu variieren.

3. Maschine nach Anspruch 1 oder 2, **dadurch gekennzeichnet, dass** die Sägescheibe (7) von einem Schwenkarm (8) getragen wird, der mit einer Stange (15) versehen ist, die eine Welle (14) zur Drehbetätigung des axialen Anschlagelements (12) antreibt.

4. Maschine nach Anspruch 3, **dadurch gekennzeichnet, dass** verstellbare Begrenzungsanschläge (16, 17) des Winkelhubes des Schwenkarms (8) vorgesehen sind.

5. Maschine nach Anspruch 3, **dadurch gekennzeichnet, dass** das radiale Klemmelement aus einem drehbaren Hebel (10) besteht, der über eine Zugfeder (11) mit dem Schwenkarm (8) verbunden ist.

6. Maschine nach Anspruch 1, **dadurch gekennzeichnet, dass** die drehbare Trommel (5) motorisch angetrieben ist.

7. Maschine nach einem oder mehreren der Ansprüche 3 bis 6, **dadurch gekennzeichnet, dass** die drehbare Trommel (5), die Sägescheibe (7) und der zugehörige Schwenkarm (8) hydraulisch angetrieben sind.

8. Verfahren zum Schneiden von Feuerholz mittels einer Schneidemaschine, die eine Trommel (5) umfasst, die um eine nach unten geneigte Achse (A) drehbar und mit rohrförmigen axialen Führungen (6) zum Einführen von Stammabschnitten und dergleichen und zu deren Gleiten durch Schwerkraft in Richtung einer Schneidestation versehen ist, die eine rotierende Sägescheibe (7) einschließt, die dazu geeignet ist, die Stammabschnitte in Querrichtung abzufangen und in Klötze vorbestimmter Länge zu schneiden,
**dadurch gekennzeichnet, dass** es das Verschieben der Sägescheibe (7) zwischen einer angehobenen Ruheposition und einer abgesenkten Arbeitsposition umfasst, um das Schneiden eines gesamten Stammabschnitts auszuführen, der fortschreitend in eine rohrförmige Führung (6) eingeführt wird, während die Trommel (5) stationär bleibt, bevor sie anschließend gedreht wird, um das Schneiden eines gesamten Stammabschnitts auszuführen, der in eine andere rohrförmige Führung (6) eingeführt wird, wobei die Verschiebung der Sägescheibe (7) mit der Drehung der Trommel (5), mit der Bewegung eines radialen Elements (10) zum Festklemmen des Stammabschnitts während des Schneidens sowie mit der Verschiebung eines axialen Anschlagelements (12) zum Anhalten des Stammabschnitts koordiniert ist.

9. Verfahren nach Anspruch 8, **dadurch gekennzeichnet, dass** die Position des axialen Anschlagelements (12) dazu eingestellt ist, die Schnittlänge der Klötze wahlweise zu variieren.

## Revendications

1. Machine pour couper du bois de chauffage, comprenant une station de coupe incluant un disque de scie tournant (7), un tambour (5) pouvant tourner autour d'un axe incliné vers le bas (A) et pourvu de guides axiaux tubulaires (6) pour l'insertion de parties de tronc et autres et leur glissement par la gravité vers ladite station de coupe, dans lequel le disque de scie tournant (7) convient pour intercepter transversalement et couper lesdites parties de tronc en bûches de longueur prédéterminée, **caractérisée en ce qu'**elle inclut en outre des premiers moyens pour déplacer le disque de scie (7) entre une position hors de fonctionnement soulevée et une position en fonctionnement abaissée, des seconds moyens pour commander la rotation du tambour (5), et des moyens de commande pour coordonner le déplacement du disque de scie (7) avec le mouvement d'un élément radial (10) pour serrer la partie de tronc pendant la coupe, ainsi que coordonner le déplacement du disque de scie (7) avec le déplacement d'un élément d'arrêt axial (12) pour stopper la partie de tronc et avec la rotation du tambour (5), dans lequel le disque de scie (7) peut être déplacé entre une position hors de fonctionnement soulevée et une position en fonctionnement abaissée à travers lesdits premiers moyens réalisant la coupe de la partie de tronc entière insérée dans un guide tubulaire (6) alors que le tambour (5) demeure fixe avant d'être mis en rotation par lesdits seconds moyens pour réaliser la coupe d'une partie de tronc entière insérée dans un autre guide tubulaire (6).

2. Machine selon la revendication 1, **caractérisée en ce que** la position dudit élément d'arrêt axial (12) est réglable de façon à faire varier sélectivement la longueur de coupe des bûches.

3. Machine selon la revendication 1 ou la revendication 2, **caractérisée en ce que** le disque de scie (7) est supporté par un bras basculant (8) pourvu d'une tige (15) qui entraine un arbre (14) pour actionner ledit élément d'arrêt axial (12) en rotation.

4. Machine selon la revendication 3, **caractérisée en ce que** des arrêts de limite réglables (16, 17) de la course annulaire dudit bras basculant (8) sont fournis.

5. Machine selon la revendication 3, **caractérisée en ce que** ledit élément de serrage radial consiste en un levier tournant (10) connecté audit bras basculant (8) par l'intermédiaire d'un ressort de traction (11).

6. Machine selon la revendication 1, **caractérisée en ce que** ledit tambour (5) rotatif est entraîné par un moteur.

7. Machine selon une ou plusieurs des revendications 3 à 6, **caractérisée en ce que** le tambour (5) rotatif, le disque de scie (7) et le bras basculant (8) lié sont entraînés hydrauliquement.

8. Procédé pour couper du bois de chauffage au moyen d'une machine de coupe comprenant un tambour (5) pouvant tourner autour d'un axe incliné vers le bas (A) et pourvu de guides axiaux tubulaires (6) pour l'insertion de parties de tronc et autres et leur glissement par la gravité vers une station de coupe incluant un disque de scie tournant (7) convenant pour intercepter transversalement et couper lesdites parties de tronc en bûches de longueur prédéterminée, **caractérisé en ce qu'**il comprend de déplacer le disque de scie (7) entre une position hors de fonctionnement soulevée et une position en fonctionnement abaissée pour réaliser la coupe d'une partie de tronc entière insérée progressivement dans un guide tubulaire (6) alors que le tambour (5) demeure fixe avant d'être mis en rotation par la suite pour réaliser la coupe d'une partie de tronc entière insérée dans un autre guide tubulaire (6), dans lequel le déplacement du disque de scie (7) est coordonné ave la rotation du tambour (5), avec le mouvement d'un élément radial (10) pour serrer la partie de tronc pendant la coupe ainsi qu'avec le déplacement d'un élément d'arrêt axial (12) pour stopper la partie de tronc.

9. Procédé selon la revendication 8, **caractérisé en ce que** la position dudit élément d'arrêt axial (12) et ajustée pour faire varier sélectivement la longueur de coupe des bûches.
